(19) **Europäisches Patentamt / European Patent Office / Office européen des brevets**

(11) **EP 1 730 444 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(21) Anmeldenummer: **05717146.4**

(22) Anmeldetag: **24.03.2005**

(51) Int Cl.:
**F02C 9/46** (2006.01)

(86) Internationale Anmeldenummer:
**PCT/EP2005/051382**

(87) Internationale Veröffentlichungsnummer:
**WO 2005/095861 (13.10.2005 Gazette 2005/41)**

(54) **Verfahren zum Betreiben einer Wärmekraftmaschine, Vorzugsweise einer Gasturbinenanlage**

Method for the operation of a heat engine, preferably a gas turbine plant

Procédé de fonctionnement d'un moteur thermique, en particulier une installation de turbine à gaz

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **31.03.2004 CH 5562004**

(43) Veröffentlichungstag der Anmeldung:
**13.12.2006 Patentblatt 2006/50**

(73) Patentinhaber: **Alstom Technology Ltd
5400 Baden (CH)**

(72) Erfinder:
• **Brautsch, Andreas
  CH-5303 Würenlingen (CH)**
• **Queloz, Patrick
  CH-4054 Basel (CH)**
• **Socher, Bernd
  CH-5242 Birr (CH)**
• **Van Straaten, Floris M. Azn.
  CH-5445 Eggenwil (CH)**

(56) Entgegenhaltungen:
**DE-A- 4 211 681          DE-C- 846 038
US-A- 6 145 318**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 730 444 B1

**Beschreibung**

**Technisches Gebiet**

Die Erfindung bezieht sich auf ein Verfahren zum Betreiben einer Wärmekraftmaschine, vorzugsweise einer Gasturbinenanlage, bei dem durch Befeuerung einer Brennkammer Heißgase entstehen, deren kinetische Strömungsenergie zumindest teilweise bei Durchströmen einer Rotationsmaschine in Rotationsenergie und letztlich durch eine mit der Rotationsmaschine verbundenen Generatoranordnung in elektrische Energie zur Einspeisung in ein Stromnetz umgewandelt wird.

Sowohl aus Sicherheitsgründen aber ebenso auch aus wirtschaftlichen Erwägungen gilt es eine zur Erzeugung von elektrischer Energie konzipierte Wärmekraftmaschine zuverlässig zu betreiben, so dass ein schneller und stets präsenter Abruf von elektrischer Energie durch den Netzbetreiber von der Wärmekraftmaschine gewährleistet werden kann. Wie bereits vorstehend erwähnt, stehen Gasturbinenanlagen im Mittelpunkt der weiteren Betrachtungen, werden doch derartige Wärmkraftmaschinen zur Stromerzeugung weit verbreitet eingesetzt. Gasturbinenanlagen werden in den meisten Fällen mit gasförmigen Brennstoff befeuert, der über geeignete Gasleitungen zur Verbrennung in der Gasturbinenanlage bereitgestellt wird.

Besondere Beachtung bei einer mit gasförmigen Brennstoff betriebenen Gasturbinenanlage kommt dem Druckverhältnis zwischen dem sich innerhalb der Brennkammer in Abhängigkeit des Lastzustandes der Gasturbinenanlage im Wege der Verdichtung der Verbrennungszuluft einstellenden Systemdruck sowie dem Gasleitungsdruck zu, mit dem der gasförmige Brennstoff dem Verbrennungsvorgang zugeführt wird. Unter normalen Betriebsbedingungen ist der Gasleitungsdruck stets größer als der lastabhängige Brennkammerdruck. In Fällen, in denen der Gasleitungsdruck des zugeführten Brennstoffes in den Bereich des lastabhängigen Brennkammerdruckes abfällt, gilt es besonders dafür Sorge zu tragen, dass ein Absinken des Gasleitungsdruckes unter dem Brennkammerdruck unter allen Umständen zu vermeiden ist. Würde der Gasleitungsdruck unter den Brennkammerdruck fallen, so erfolgt ein Flammenrückschlag in die Gaszuleitung, wodurch die Betriebssicherheit der gesamten Brennstoffversorgung gefährdet wird. Zumindest könnten Heißgase in das Brennstoffzuleitungssystem eindringen, wodurch die Brennstoffzufuhr vollständig zum Erliegen kommt und die Brennerflamme erlischt. In diesem Fall fällt die Gasturbinenanlage für einen beträchtlichen Zeitraum für die weitere Stromerzeugung aus, zumal ein erneutes Hochfahren der Anlage bis zum Erreichen einer geforderten Nennlast umfangreiche und zeitaufwendige Maßnahmen erfordert.

Aus den genannten Gründen ist daher dafür Sorge zu tragen, die Folgen des mit dem Absinken des Gasleitungsdruckes unter den Brennkammerbetriebsdruck zu vermeiden.

Um Gasturbinenanlagen vor den Folgen eines unvorhergesehenen Druckabfalls in der Gaszuführungsleitung zu schützen, sind sehr strenge Betriebsgrenzen festgelegt worden, deren Über- bzw. Unterschreiten, respektive im Falle eines Druckabfalls in einer Gaszuführleitung, automatisch zur Einleitung von Schutzmaßnahme führt, nämlich eine unverzügliche Ablastung der Gasturbine durch Reduzierung der Brennstoffzufuhr bis die Gasturbinenanlage vollständig abgeschaltet ist. Zwar dient diese Maßnahme dem Schutz vor irreversiblen Schäden an einzelnen Gasturbinenkomponenten, insbesondere all jenen, die am Verbrennungsprozess beteiligt sind, doch führt das vollständige Ablasten der Gasturbinenanlage zu einer erheblichen Reduzierung der wirtschaftlichen Verfügbarkeit, auf die es jedoch aufgrund der stets härter werdenden Wettbewerbsverhältnisse immer mehr ankommt.

Manche Gasturbinenanlagen sehen so genannte Brennstoffverdichterstufen vor, durch die der Versorgungsgasdruck stets auf ein den sicheren Betrieb der Gasturbinenanlage gewährleistendes Druckniveau gehalten werden kann. Derartige Brennstoffverdichterstufen können bedarfsweise zugeschaltet werden, um in Fällen eines auftretenden Abfalls des Versorgungsgasdruckes relativ zum erforderlichen variablen Gasdruck, der nicht nur vom Lastzustand der Gasturbine abhängt, sondern darüber hinaus auch anderen Parametern unterworfen ist, wie bspw. die Umgebungstemperatur, Brennstofftemperatur, Luftfeuchtigkeit, um nur einige zu nennen, den Versorgungsgasdruck auf ein erforderliches Druckniveau zu stabilisieren. Ein Zuschalten einer Brennstoffverdichterstufe ist jedoch aus Sicht der Energieerzeugung unerwünscht, zumal hierdurch ein beträchtlicher Anteil der von der Gasturbinenanlage erzeugten Energie zum Antrieb der Brennstoffverdichtereinheit aufgewendet werden muss, wodurch der energetische Gesamtwirkungsgrad der Gasturbinenanlage erheblich reduziert wird.

Ein Verfahren zum Betreiben einer Wärmekraftmaschine gemäß dem Stand der Tecknik ist aus Dokument DE 4211681 bekannt.

**Darstellung der Erfindung**

Es besteht daher die Aufgabe ein Verfahren zum Betrieb einer Wärmekraftmaschine, insbesondere zum Betrieb einer Gasturbinenanlage, durch die letztlich elektrische Energie zur Einspeisung in ein Stromnetz erzeugbar ist, derart anzugeben, dass die Verfügbarkeit der Wärmekraftmaschine verbessert werden soll, d.h. insbesondere in Fällen in denen der Gasleitungsdruck im Brennstoffversorgungssystem absinkt, gilt es nach alternativen Regelmechanismen zu suchen, die nicht notwendigerweise zu einer Notabschaltung der gesamten Wärmekraftmaschine führen. Ebenso soll der Einsatz energiezehrender Brennstoffverdichterstufen vermieden werden, um selbst in Fällen eines Abfalls des Brennstoffversorgungsdruckes den Betrieb der Wärmekraftmaschine weitgehend ohne drastische Energieeinbusse aufrecht erhalten zu können. Darüber hinaus gilt es jedoch ebenso die hohen Sicherheitsstandards, die an eine in Betrieb befindliche Wärmekraftmaschine gestellt werden, uneingeschränkt zu erfüllen.

Der allgemeine Erfindungsgedanke bezieht sich grundsätzlich auf alle Wärmekraftmaschinen, bei denen durch Verbrennen gasförmigen Brennstoffes innerhalb einer Brennkammer Heißgase entstehen, durch die eine Rotationseinheit angetrieben wird, deren Rotationsenergie in eine weitere Energieform, vorzugsweise in elektrische Energie, umgewandelt wird. Hierbei repräsentiert die der Rotationseinheit innewohnende Rotationsenergie den sog. Lastzustand der Wärmekraftmaschine, der durch Regelung der Menge des der Verbrennung zugeführten gasförmigen Brennstoffes eingestellt und als äquivalente Größe für die in ein Stromversorgungsnetz eingespeiste elektrische Energie angesehen werden kann. Je nach dem im Stromnetz vorherrschenden Energiebedarf ist der Lastzustand durch Regelung der Brennstoffzufuhr entsprechend anzupassen. Es sind darüber hinaus auch weitere zur Leistungssteigerung von Wärmekraftmaschinen dienende Massnahmen bekannt, durch die der Verbrennungsprozess ohne die Brennstoffzufuhr selbst zu erhöhen optimiert werden kann. So kann durch gezieltes Einspeisen von Wasserdampf in das zur Zündung innerhalb der Brennkammer gelangende Brennstoff-Luft-Gemisch der Massenstrom erhöht und das Volumen der durch den Verbrennungsprozess entstehenden Heissgase vergrößert werden. Zugleich dient die Wasserdampfeinspeisung der Kühlung aller der am Verbrennungsprozess beteiligten Anlagenkomponenten. Eine weitere Massnahme zur Leistungssteigerung bietet die Kühlung der dem Verbrennungsprozess zugeführten Verbrennungszuluft. So verfügt kältere Luft über eine höhere Dichte und somit einen höheren Sauerstoffanteil als wärmere Luft. Es ist evident, dass der Verbrennungsprozess in Gegenwart größerer Sauerstoffmengen mit besseren Ausbrandergebnissen erfolgt. Auch trägt eine gezielte Kühlung der dem Verbrennungsprozess zugeführten gasförmigen Brennstoff dazu bei die Brennstoffdichte zu erhöhen und somit die Brennereffizienz zu steigern.

Ohne den allgemeinen Erfindungsgedanken in Bezug auf die Betriebsweise gattungsgemäßer Wärmekraftmaschinen einzuschränken, stellen die weiteren Ausführungen auf eine zur elektrischen Energieerzeugung ausgelegte Gasturbinenanlage ab, die repräsentativ für die in Rede stehende Wärmekraftmaschine anzusehen ist.

Das erfindungsgemäße Verfahren gemäß dem Oberbegriff des Patentanspruches 1, sieht in Abkehr zu den bisherigen Massnahmen, die zur Stabilisierung der Brennstoffversorgungsdruckes und zum Schutz der gesamten Gasturbinenanlage vor irreversiblen Schädigungen beitragen, vor, bei Auftreten eines Druckabfalles des Brennstoffversorgungsdruckes in einem ersten Schritt zunächst jene Massnahmen zu drosseln bzw. vollständig abzuschalten, die zur Leistungssteigerung der Gasturbinenanlage beitragen und nicht die dem Verbrennungsprozess zugeführte Brennstoffmenge betreffen.

So wird die Wärmekraftmaschine im Normalfall bei einem Lastzustand betrieben, sofern der gasförmige Brennstoff durch die Versorgungsgasleitung unter einem Gasdruck $p_{Gas}$ der Verbrennung zugeführt wird, der größer als ein kritischer Druckwert $p_{actionlimit}$ sein soll, der selbst vom Lastzustand der Gasturbinenanlage abhängt. Tritt der Fall ein, dass der Versorgunsgasdruck $pGas$ auf den kritischen Druckwert $p_{actionlimit}$ abfällt, so werden erfindungsgemäß in einem ersten Schritt wenigstens eine der folgenden Massnahmen eingeleitet werden:

- Drosseln der Kühlung der Verbrennungsluft, die zur Gemischbildung mit dem Brennstoff zur Verbrennung gebracht wird,
- Drosseln der Wasserdampfbeimischung in das zu verbrennende Brennstoff-Luft-Gemisch sowie
- Drosseln der Kühlung des dem Brennstoff-Luft-Gemisches beizumischenden Wasserdampfes.

Alle die vorstehenden Massnahmen tragen gemeinsam sowie einzeln dazu bei den Verbrennungsprozess zu entspannen, wodurch der Brennkammerdruck und dadurch letztlich auch der kritische Druckwert $p_{actionlimit}$ reduziert wird. Diese Massnahmen wirken sich auf das Betriebsverhalten der Gasturbine in gleicher Weise aus, als würde die Umgebungstemperatur erhöht werden, unter denen die Gasturbinenanlage arbeitet.

Im Falle einer durch die Einleitung der vorstehenden Massnahmen erwünschte Stabilisierung des Versorgungsgasdruckes können die Massnahmen wieder reduziert oder ganz unterbunden werden. Führt eine Drosselung einzelner oder aller vorstehender Massnahmen nicht zum gewünschten Ergebnis, so wird eine vollständige Abschaltung der Verbrennungsluftkühlung, der Wasserdampfbeimischung sowie der Kühlung des beizumischenden Wasserdampfes herbeigeführt. Führen einzelne oder alle Abschaltmassnahmen nicht zum erwünschten Ergebnis einer Stabilisierung der Brennstoffversorgungsdruckes so erfolgt in einem zweiten Schritt eine aktive Reduzierung der Brennstofftemperatur. Eine Reduzierung der Brennstofftemperatur führt aufgrund der Erhöhung der Brennstoffdichte zu einer Senkung der Brennstoffvolumenstromes und zugleich zu einer Reduzierung der Druckverluste innerhalb der Brennstoffzuführung.

Sollte auch die Brennstofftemperaturreduzierung nicht zur Stabilisierung oder Erhöhung des Gasdruckes führen wird eine geregelte Ablastung der Wärmekraftmaschine eingeleitet.

Befindet sich die Gasturbinenanlage in einem Ausgangslastzustand, bei dem der Gasleitungsdruck $p_{Gas}$ aus welchen Gründen auch immer absinkt und den im Ausgangslastzustand vorgegebenen Druckwert $p_{action\ limit}$ erreicht, so erfolgt eine sog. Standard-Ablastung, bei der die dem Verbrennungsvorgang zugeführte Menge an gasförmigem Brennstoff unter Vorgabe einer vom jeweiligen Typ der Gasturbinenanlage abhängigen Brennstoffdrosselrate reduziert wird.

Durch diese Maßnahme wird automatisch die Last, die im Ausgangslastzustand vorherrscht reduziert, wodurch automatisch der systembedingte Brennkammerdruck abnimmt.

Da das vom Lastzustand abhängige Referenzdruckniveau $p_{action\ limit}$ stets über dem ebenso vom Lastzustand abhängigen systembedingten Brennkammerdruck $p_{system\ requirement}$ liegt, ermöglicht der zwischen beiden Druckniveaus vorgesehene Druckunterschied eine Art Pufferbereich, durch den das weitere Verhalten des in der Gaszuleitung vorherrschenden Gasdruckes $p_{Gas}$, insbesondere im Verhältnis zu dem vom Lastzustand abhängigen Referenzdruck $p_{action\ limit}$ beobachtet werden kann, bevor eine weitere Massnahme, wie bspw. eine Notabschaltung eingeleitet wird.

So sieht das weitere Verfahren in Abhängigkeit eines sich bei Verringerung der Last ausbildenden Druckverhältnisses zwischen dem Gasdruck $p_{Gas}$ und dem lastabhängigen Referenzdruck $p_{action\ limit}$ unter Zugrundelegung eines Entscheidungskriteriums entweder vor, die Standard-Ablastung zu beenden und die Gasturbinenanlage wieder in den Ausgangslastzustand zurückzuführen, eine vollständige Not-Ablastung durchzuführen, bei der die Brennstoffreduzierung rapider erfolgt als im Falle der Standard-Ablastung, oder eine Umschaltung der Brennstoffversorgung auf eine andere Brennstoffart zu veranlassen, sofern die Gasturbinenanlage über eine duale Brennstoffversorgung verfügt.

Führt eine durch Druckabfall des Gasdruckes $p_{Gas}$ auf das Druckniveau $p_{action\ limit}$ erforderlich gewordene Standard-Ablastung zu einer Stabilisierung des Gasdruckes $p_{Gas}$, wobei durch die Lastreduzierung der Gasdruck $p_{Gas}$ stets größer als der Referenzdruck $p_{action\ limit}$ bleibt, so kann unter Zugrundelegung einer gezielten Auflastung die Gasturbinenanlage wieder in ihren Ausgangslastzustand zurück überführt werden.

Mit Hilfe des geregelten Verfahrens ist es somit möglich, Gasturbinenanlagen auch bei reduziertem Gasdruck $p_{Gas}$ sicher zu betreiben, ohne dabei eine Notabschaltung einzuleiten, wodurch die Verfügbarkeit und letztlich die Wirtschaftlichkeit von Gasturbinenanlagen erheblich verbessert werden kann.

Nur in Fällen, in denen der Gasdruck $p_{Gas}$ trotz Standard-Ablastung weiter abfällt, sind Notabschaltungen zur Gewährleistung der Betriebssicherheit und der Vermeidung irreversibler Schäden unumgänglich. In Fällen, in denen Gasturbinenanlagen über eine duale Brennstoffversorgung verfügen, d.h. sowohl mit gasförmigen als auch mit flüssigem Brennstoff betrieben werden können, kann alternativ zur Notabschaltung eine Umschaltung der Brennstoffversorgung von Gasauf Flüssigbrennstoffzufuhr vorgenommen werden.

**Kurze Beschreibung der Erfindung**

Die Erfindung wird nachstehend ohne Beschränkung des allgemeinen Erfindungsgedankens anhand eines Ausführungsbeispieles unter Bezugnahme auf die Zeichnungen exemplarisch beschrieben. Es zeigen:

Fig. 1    Flußdiagramm zur Darstellung des Verfahrens, und
Fig. 2    Gasdruck-/Last-Diagramm, zur Beschreibung der geregelten Ablastung

**Wege zur Ausführung der Erfindung, gewerbliche Verwendbarkeit**

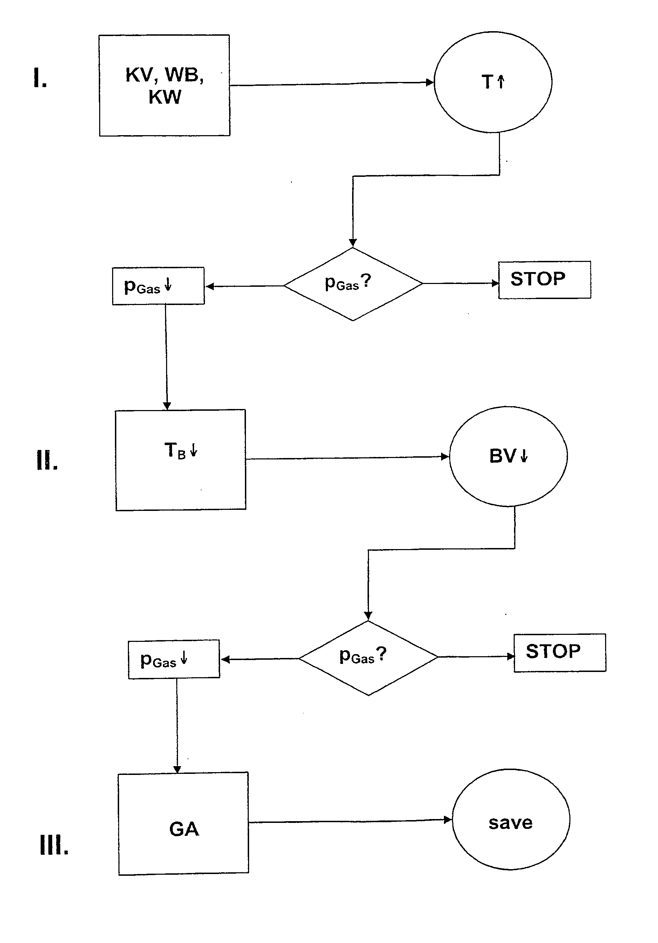

In Figur 1 ist ein Entscheidungsflußdiagramm dargestellt, anhand dem das erfindungsgemäße Verfahren zum erläutert werden soll. Nicht im Diagramm berücksichtig ist der Normalfall, bei dem die Gasturbinenanlage unter Druckbedingungen arbeitet, bei denen der Gasversorgungsdruck stets über einem systembedingten Mindestdruckniveau liegt. Fällt jedoch der Gasdruck unter das Mindestdruckniveau $p_{actionlimit}$, so werden in einem ersten Schritt I alle Leistungssteigernden Massnahmen gedrosselt bzw. vollständig abgeschaltet, d.h. Kühlung der Verbrennungsluft (KV), die zur Gemischbildung mit dem Brennstoff zur Verbrennung gebracht wird, Wasserdampfbeimischung (WB) in das zu verbrennende Brennstoff-Luft-Gemisch sowie Kühlung des dem Brennstoff-Luft-Gemisches beizumischenden Wasserdampfes (KW).

Durch die vorstehenden Massnahmen erfährt die Gasturbinenanlage eine Betriebsbereichsänderung, die mit einer Erhöhung der Umgebungstemperatur T äquivalent ist. Sollte sich infolgedessen der Gasdruck $p_{Gas}$ in der Versorgungsleitung relativ zum Mindestdruckniveau $p_{actionlimit}$ stabilisieren, so können die vorstehenden Massnahmen beibehalten oder sukzesive unter Beobachtung der Gasdruckes rückgängig gemacht werden. Für den Fall, dass der Gasdruck unverändert weiter fällt, erfolgt in Schritt II eine aktive Reduzierung der Brennstofftemperatur $T_B$.

Eine Reduzierung der Brennstofftemperatur führt aufgrund der Erhöhung der Brennstoffdichte zu einer Senkung der Brennstoffvolumenstromes BV und zugleich zu einer Reduzierung der Druckverluste innerhalb der Brennstoffzuführung.

Wieder werden weitere Massnahme vom Verhalten des Gasdruckes $p_{Gas}$ abhängig gemacht. Sollte sich infolge der Brennstofftemperaturreduzierung der Gasdruck $p_{Gas}$ in der Versorgungsleitung relativ zum Mindestdruckniveau

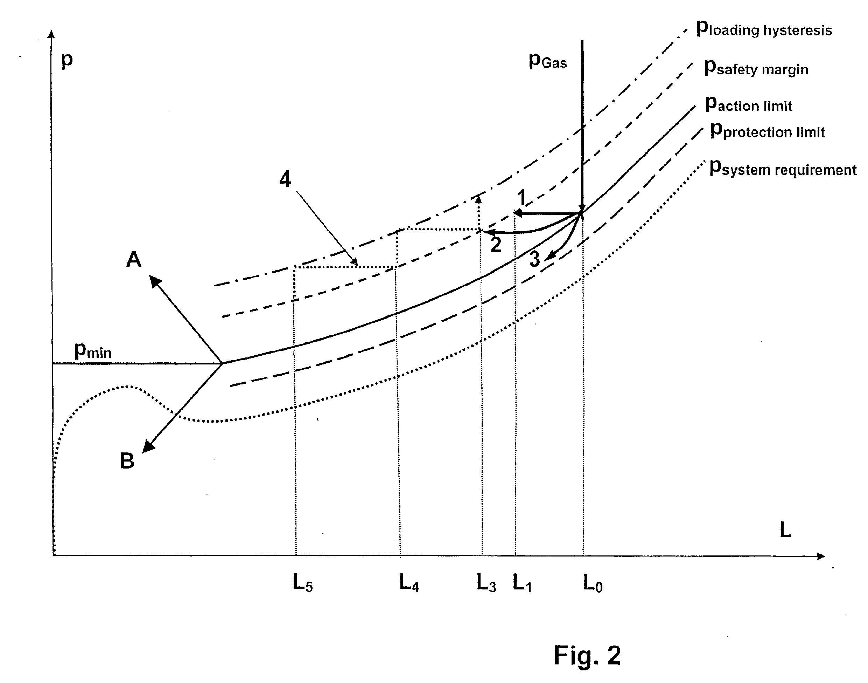

$p_{\text{actionlimit}}$ stabilisieren, so kann die Temperaturreduzierung beibehalten oder sukzesive unter Beobachtung der Gasdruckes rückgängig gemacht werden. Für den Fall, dass der Gasdruck unverändert weiter fällt, erfolgt in Schritt III eine geregelte Ablastung (GA) der Gasturbinenanlage, die aus Gründen der Schadensvermeidung eingeleitet wird, die Gasturbinenanlage in einen betriebssicheren Zustand (save) überführt und im weiteren unter Bezugnahme auf Figur 2 beschrieben wird.

Die Figur 2 zeigt ein p/L-Diagramm, in dem längs der Ordinate der Druck p und längs der Abszisse der Lastzustand L angetragen sind.

Grundsätzlich gilt es den Gasdruck $p_{\text{Gas}}$ stets größer als den sich in Abhängigkeit des Lastzustandes L ausbildenden, systembedingten Brennkammerdruck $p_{\text{system-requirement}}$ zu halten, will man verhindern, dass die eingangs erläuterten Konsequenzen, die unweigerlich zu einer irreversiblen Beschädigung aller am Verbrennungsprozess beteiligten Komponenten führen, eintreten.

Beim Zünden einer Gasturbinenanlage ist dafür Sorge zu tragen, dass der Gasdruck für die Brennstoffzufuhr einen Mindestgasdruck $p_{\text{min}}$ aufweist, der deutlich über dem systembedingten Brennkammerinnendruck $p_{\text{system-requirement}}$ im Bereich des unteren Lastzustandes liegt. Kann dieser Forderung nicht nachgekommen werden, so wird aus Sicherheitsgründen der Zündfunke für die Zündung eines sich innerhalb des Brenners ausbildenden Brennstoffluftgemisches nicht freigegeben.

Ausgehend von dem Mindestgasdruck $p_{\text{min}}$ im unteren Lastbereich schließt sich in den Bereich höherer Lasten L eine Druckreferenzlinie $p_{\text{action limit}}$ an, die proportional zum Brennkammerdruck $p_{\text{system-requirement}}$ ansteigt und unabhängig vom jeweiligen Lastzustand jeweils größer als $p_{\text{system-requirement}}$ gewählt ist.

Ferner sind drei weitere Drucklinien in dem in der Figur dargestellten Diagramm eingezeichnet, im Einzelnen sind dies: $p_{\text{protection limit}}$, $p_{\text{safety margin}}$ und $p_{\text{loading hysteresis}}$. Die zusätzlichen drei Drucklinien verlaufen alle weitgehend parallel zur Referenzdrucklinie $p_{\text{action limit}}$, wobei die Referenzdrucklinie $p_{\text{action limit}}$ im mittleren und höheren Lastbereich in der nachstehenden Weise aus dem lastabhängigen, systembedingten Brennkammerinnendruck $p_{\text{system-requirement}}$ hervorgeht:

$$p_{\text{action limit}} = p_{\text{system-requirement}} \cdot a, \text{ mit } 1{,}2 \leq a \leq 1{,}5, \text{ vorzugsweise } a = 1{,}35.$$

Bezüglich der zusätzlich in der Diagrammdarstellung vorgesehenen Drucklinien für $p_{\text{protection limit}}$, $p_{\text{safety margin}}$ sowie $p_{\text{loading hysteresis}}$ gelten vorzugsweise die nachfolgenden Bedingungen:

$$p_{\text{safety margin}} = p_{\text{system-requirement}} \cdot a + 1\text{bar},$$

$$p_{\text{loading hysteresis}} = p_{\text{system-requirement}} \cdot a + 1{,}3 \text{ bar}$$

sowie

$$p_{\text{protection limit}} = p_{\text{system-requirement}} \cdot a - 0{,}3 \text{ bar}.$$

Je nach Gasturbinenart können, die in den obigen Beziehungen gewählten Faktoren unterschiedlich gewählt werden.

Der Normalbetrieb einer Gasturbinenanlage erfolgt unter ausreichend hohem Gasdruck $p_{\text{Gas}}$, der in jedem Lastzustand L stets höher liegt als der vom Lastzustand abhängige Referenzdruck $p_{\text{action limit}}$. Im normalen Betriebszustand gilt daher stets:

$$p_{\text{Gas}} > p_{\text{action limit}}.$$

Sollte der Gasdruck $p_{\text{Gas}}$ jedoch bei einem beliebig gewählten Ausgangslastzustand $L_0$ absinken und den

Druckwert $p_{action\ limit}$ im Ausgangslastzustand $L_0$ erreichen, so wird die Gasturbinenanlage automatisch unter Zugrundelegung einer standardisierten Brennstoffdrosselung mit einer von der jeweiligen Gasturbinenanlage abhängigen Drosselrate $r_1$ abgelastet.

Im Falle der Standard-Ablastung können grundsätzlich die folgenden Fälle voneinander unterschieden werden:

Fall 1 (siehe Pfeil 1 im Diagramm)

Durch die Standard-Ablastung verbleibt der Gasdruck $p_{Gas}$ weitgehend konstant, so dass sich im Wege der Lastreduzieerung bei Erreichen eines geringeren Lastzustandes $L_1$ eine relative Drucküberhöhung des Gasdruckes $p_{Gas}$ gegenüber dem Druckwert $p_{action\ limit}$ im Lastzustand $L_1$ einstellt mit: $p_{Gas} = p_{safety\ margin}$ ($L_1$).

Die Drucklinie $p_{safety\ margin}$ dient als ein stets über der Referenzdrucklinie $p_{action\ limit}$ liegendes Sicherheitsdruckniveau. Gleicht sich der Gasdruck $p_{Gas}$ durch reduzierte Brennstoffzufuhr in einem reduzierten Lastzustand $L_1$ dem Sicherheitsdruckniveau $p_{safety\ margin}$ an, so wird die Standard-Ablastung beendet. Verbleibt der Gasdruck $p_{Gas}$ auch nach der Standard-Ablastung konstant und behält das Druckniveau $p_{safety\ margin}$ im Lastzustand $L_1$ bei, so kann im Rahmen eines Standard-Lastaufbaus die Gasturbinenanlage wieder in den Ausgangslastzustand $L_0$ überführt werden.

Sinkt hingegen der Gasdruck $p_{Gas}$ unmittelbar nach Erreichen des Druckwertes $p_{safety\ margin}$ im Lastzustand $L_1$ nach Beendigung der Standard-Ablastung erneut ab und nähert sich im Lastzustand $L_1$ dem Referenzdruckniveau $p_{action\ limit}$, so erfolgt ein wiederholtes Standardablasten auf einen weiter reduzierten Lastzustand $L_2$ (nicht im Diagramm dargestellt). Gleicht sich der Gasdruck $p_{Gas}$ im reduzierten Lastzustand $L_2$ dem auf diesem Lastniveau herrschenden Sicherheitsdruck $p_{saftey\ margin}$ an, so wird die Standard-Ablastung aufs neue beendet. Stabilisiert sich der Gasdruck $p_{Gas}$, so wird mit einem Lastaufbau vom Lastzustand $L_2$ auf den Ausgangslastzustand $L_0$ begonnen.

Führen die vorstehend beschriebenen Standard-Ablastungsmaßnahmen jedoch nicht zu dem erwünschten Ergebnis hinsichtlich einer Gasdruckstabilisierung mit nachfolgender Überführung der Gasturbinenanlage in den Ausgangslastzustand $L_0$ zurück, so gelangt der Gasdruck durch schrittweises Wiederholen der vorstehenden Prozedur auf das Minimumdruckniveau $p_{min}$, von dem aus eine weitere Ablastung aus Gründen der Schadensvermeidung nicht mehr möglich ist. In diesem Fall bleiben lediglich zwei Alternativen A und B übrig, nämlich entweder eine Notabschaltung der Gasturbinenanlage, um ein weiteres Absinken des Gasdruckes unter den systembedingten Brennkammerinnendruck $p_{system-requirement}$ zu verhindern (Fall B), oder eine Umschaltung auf eine alternative Brennstoffart (Fall A) bspw. eine Befeuerung der Brennkammer anstelle von mit gasförmigem Brennstoff mit Flüssigbrennstoff. Der Fall A ist jedoch lediglich, wie bereits erwähnt, bei dualen Brennersystemen möglich.

Das vorstehend geschilderte Szenario beschreibt den Fall eines langsam erfolgenden Druckverlustes in der Brennstoffzuleitung, bei dem zumeist eine Brennstoffdrosselung im Wege einer Standard-Ablastung zu einem gleich bleibenden Gasdruck $p_{Gas}$ führt, der sich bei Erreichen des Sicherheitsdruckniveaus $p_{safety\ margin}$ in einem reduzierten Lastzustand $L_1$ wieder stabilisiert und die Möglichkeit einer Überführung der Gasturbinenanlage im Ausgangslastzustand eröffnet.

Fall 2 (siehe Pfeil 2 im Diagramm)

Tritt hingegen ein deutlicher und schneller Druckabfall im Gasdruck $p_{Gas}$ auf, so wird der Referenzdruck $p_{action\ limit}$ im Ausgangslastzustand $L_0$ relativ rasch erreicht. In gleicher Weise erfolgt automatisch die vorstehend beschriebene Standard-Ablastung durch Drosselung der Brennstoffzufuhr. Zwar verbleibt der Gasdruck $p_{Gas}$ in einem derartigen Fall trotz Standard-Ablastung nicht konstant, sondern fällt dynamisch weiter ab, dies jedoch langsamer als der durch die Standard-Ablastung abfallende Referenzdruckwert $p_{action\ limit}$. Auch in diesem Fall gilt während der gesamten Standard-Ablastung stets $p_{Gas} > p_{action\ limit}$ (L). Bei Erreichen des Sicherheitsgasdruckes $p_{safety\ margin}$ in einem stark abgelasteten Lastzustand $L_3$ wird gleichsam wie im vorstehend geschilderten Fall die Brennstoffdrosselung im Wege der Standardablastung beendet. Im Falle einer Gasdruckstabilisierung im Lastzustand $L_3$ kann der Lastzustand $L_3$ im Rahmen eines Standard-Lastaufbaus wieder in den Ausgangslastzustand $L_0$ überführt werden. Auf den Standard-Lastaufbau wird an einer weiter nachfolgenden Stelle näher eingegangen.

Fall 3 (siehe Pfeil 3 im Diagramm)

Sollte bei einem starken Abfall des Gasdruckes $p_{Gas}$ auf das Referenzdruckniveaus $p_{action\ limit}$ im Ausgangslastzustand $L_0$ die automatisch eingeleitete Standard-Ablastung nicht zu einer gewünschten Stabilisierung des Druckniveaus innerhalb der Gasleitung führen und unterschreitet der Gasdruck $p_{Gas}$ trotz Standard-Ablastung das Referenzdruckniveau $p_{action\ limit}$, so wird eine Notabschaltung der Gasturbinenanlage unvermeidbar, im Falle einer Druckreduzierung des Gasdruck $p_{Gas}$ auf ein über dem Brennkammerdruck $p_{system-requirement}$ liegendes Schutzdruckniveau $p_{protection\ limit}$.

In einem derartigen Fall ist eine Notabschaltung aus Gründen der Vermeidung von irreversiblen Systembeschädigungen unvermeidbar. Alternativ zur Notabschaltung kann im Falle einer dualen Brennstoffversorgung der Gasturbinenanlage von der Versorgung des Verbrennungsprozesses mit gasförmigem Brennstoff auf Flüssigbrennstoffbetrieb umgeschaltet werden.

Im Falle eine Notablastung wird die Brennstoffzufuhr mit einer weitaus größeren Drosselrate $r_2$ durchgeführt, als im Falle einer Standard-Abtastung. Typischer Weise beträgt die Drosselrate $r_2$ im Falle einer Notablastung wenigstens das 6-fache, vorzugsweise wenigstens das 10-fache der Drosselrate $r_1$, die bei der Standard-Ablastung eingesetzt wird.

In den vorstehend beschriebenen Fällen, in denen durch gezielte Standard-Ablastung der Gasdruck $p_{Gas}$ auf dem jeweils vom reduzierten Lastniveau abhängigen Sicherheitsdruckniveau $p_{safety\ margin}$ stabilisiert werden kann, d. h. der Gasdruck $p_{Gas}$ verbleibt über eine vorgebbare Zeitspanne von wenigstens 1 Minute unverändert stabil bei konstanter Brennstoffzufuhr, gilt es die Gasturbinenanlage auf den ursprünglichen Ausgangslastzustand $L_0$ wieder zurückzuführen. Dies erfolgt, wie bereits erwähnt im Rahmen eines Standard-Lastaufliaus, der, wie aus der Diagrammdarstellung zu entnehmen ist (siehe gepunkteter Linienzug 4), stufenweise erfolgt. Zunächst sei angemerkt, dass der Ausgangslastzustand $L_0$, bei dem der Druckabfall in der Brennstoffzufuhrleitung auftrat, im System gespeichert wird, so dass der Ausgangslastzustand nach entsprechender Standard-Ablastung gezielt wieder hergestellt werden kann. Bezug nehmend auf die Diagrammdarstellung sei angenommen, dass der im Wege der Standard-Ablastung eingenommene reduzierte Lastzustand $L_5$ sei, an dem der Gasruck $p_{Gas}$ den Sicherheitsdruck $p_{safety\ margin}$ eingenommen hat und bei gleich bleibendem Lastzustand $L_5$ auf das Druckniveau $p_{loading\ hysteresis}$ ansteigt, für das gilt: $p_{loading\ hysteresis} > p_{safety\ margin}$, wobei das Druckniveau $p_{Loading}$ Hysteresis stest größer dem Sicherheitsdruckniveau $p_{Safety\ Margin}$ ist.

Bei Erreichen des Druckniveaus $p_{loading\ hysteresis}$ erfolgt ein Standard-Lastaufbau durch erhöhte Brennstoffzufuhr mit einer von der Gasturbinenanlage abhängigen Brennstoffzufuhrrate, die vorzugsweise zeitlich konstant gewählt ist. Während des Standard-Lastaufbaus bleibt der Gasdruck $p_{Gas}$ typischer Weise konstant, wobei bei Erreichen des Sicherheitsdruckniveaus $p_{safety\ margin}$ im Lastzustand $L_4$ der Standard-Lastaufbau unterbrochen wird. Wieder erfolgt ein Anstieg des Gasdruckes $p_{Gas}$ im erhöhten Lastzustand $L_4$ bis das Druckniveau $p_{loading\ hysteresis}$ im Lastzustand $L_4$ erreicht ist. Erneut wird die Brennstoffzufuhr erhöht, so dass im höheren Lastzustand $L_3$ das Sicherheitsdruckniveau $p_{safety\ margin}$ erreicht ist. Der schrittweise durchgeführte Standard-Lastaufbau wird sooft wiederholt, bis der Ausgangslastzustand $L_0$ erreicht ist.

Mit Hilfe des erfindungsgemäßen Verfahrens ist es möglich, die Verfügbarkeit von Gasturbinenanlagen zu verbessern und die Anfälligkeit hinsichtlich Druckschwankungen innerhalb der Brennstoffzuführleitungen deutlich zu reduzieren. Notabschaltungen werden mit dem beschriebenen Verfahren nur in den seltenen Fällen erforderlich, sofern die Wärmekraftmaschine ausschließlich mit gasförmigen Brennstoff befeuert wird und der Druckabfall in der Gasleitung trotz Standard-Ablastung nicht stabilisierbar ist.

Insbesondere in Ländern und Regionen, in denen die Versorgung von gasförmigen Brennstoff Schwankungen unterworfen ist, bietet das Verfahren eine zuverlässige Betriebsweise von gasbefeuerten Wärmekraftmaschinen, insbesondere von Gasturbinenanlagen.

## Patentansprüche

1. Verfahren zum Betreiben einer Wärmekraftmaschine, vorzugsweise einer Gasturbinenanlage, bei der durch Verbrennen gasförmigen Brennstoffes innerhalb einer Brennkammer unter Ausbildung von Heißgasen eine Rotationseinheit, vorzugsweise wenigstens eine Gasturbinenstufe, angetrieben wird, deren Rotationsenergie in eine weitere Energieform, vorzugsweise in elektrische Energie, umgewandelt wird und einen Lastzustand (L) der Wärmekraftmaschine beschreibt, wobei der Lastzustand (L) durch Regelung der Menge des der Verbrennung zugeführten gasförmigen Brennstoffes eingestellt wird, wobei

   die Wärmekraftmaschine bei einem Lastzustand (L) betrieben wird, sofern der gasförmige Brennstoff durch eine Gasleitung unter einem Gasdruck $p_{Gas}$ der Verbrennung zugeführt wird, für den gilt

$$p_{Gas} > p_{actionlimit}(L),$$

   wobei $p_{actionlimit}(L)$ einen Druckwert darstellt, der wenigstens vom Lastzustand (L) der Wärmekraftmaschine abhängt, **dadurch gekennzeichnet,**
   **dass** für den Fall eines Abfallens des Gasdruckes $p_{Gas}$ auf den Druckwert $p_{actionlimit}(L)$ wenigstens eine der folgenden Massnahmen eingeleitet werden:

   - Drosseln der Kühlung der Verbrennungsluft, die zur Gemischbildung mit dem Brennstoff zur Verbrennung gebracht wird

- Drosseln der Wasserdampfbeimischung in das zu verbrennende Brennstoff-Luft-Gemisch sowie
- Drosseln der Kühlung des dem Brennstoff-Luft-Gemisches beizumischenden Wasserdampfes,

für den Fall dass das Drosseln bis hin zum vollständigen Abschalten einer oder mehrerer der vorstehenden Massnahmen zu keiner Stabilisierung oder Erhöhung des Gasdruckes $p_{Gas}$ führt, wird die Temperatur des der Verbrennung zugeführten gasförmigen Brennstoffes reduziert, und

für den Fall, dass die Brennstofftemperaturreduzierung nicht zur Stabilisierung oder Erhöhung des Gasdruckes führt, wird eine geregelte Ablastung der Wärmekraftmaschine eingeleitet.

2. Verfahren nach Anspruch 1,
**dadurch gekennzeichnet, dass** das geregelte Ablasten der Wärmekraftmaschine durchgeführt wird, falls der Gasdruck $p_{Gas}$ bei einem Ausgangslastzustand ($L_0$) unter den Druckwert $p_{actionlimit}(L_0)$ fällt, indem eine Standard-Ablastung durch Reduzierung der der Verbrennung zugeführten Menge an gasförmigen Brennstoff durchgeführt wird, und

dass in Abhängigkeit eines sich bei Verringerung des Last ausbildenden Druckverhältnisses zwischen $p_{Gas}$ und $p_{action\ limit}(L)$ unter Zugrundelegung eines Entscheidungskriteriums entweder

i) die Standard-Ablastung beendet wird und die Wärmekraftmaschine auf ihren Ausgangslastzustand überführt wird oder

ii) eine vollständige Not-Ablastung herbeigeführt wird, bei der die Brennstoffreduzierung rapider durchgeführt wird als bei der Standard-Ablastung, oder

iii) eine Umschaltung der Brennstoffversorgung auf eine andere Brennstoffart erfolgt.

3. Verfahren nach Anspruch 2,
**dadurch gekennzeichnet, dass** für den Fall $p_{Gas} = p_{action\ limit}(L_0)$ die Standard-Ablastung zu einem Gasdruck $p_{Gas}$ führt, der bei einem verringerten Lastzustand $L_1$ einen Druckwert $p_{safety\ margin}(L_1)$ annimmt, für den gilt:

$$p_{safety\ margin}(L_1) > p_{action\ limit}(L_1)$$

die Standard-Ablastung beendet und die Wärmekraftmaschine durch Erhöhung der Brennstoffzufuhr in den Ausgangslastzustand $L_0$ überführt wird.

4. Verfahren nach Anspruch 2,
**dadurch gekennzeichnet, dass** für den Fall $p_{Gas} = p_{action\ limit}(L_0)$ die Standard-Ablastung zu einem Absinken des Gasdrucks $p_{Gas}$ auf einen Druckwert
$p_{protection\ limit}(L_2)$ bei einem verringerten Lastzustand $L_2$ führt, mit $p_{system\ requirement}(L_2) < p_{protection\ limit}(L_2) < p_{action\ limit}(L_2)$, die vollständige Not-Ablastung oder die Umschaltung der Brennstoffzufuhr auf eine andere Brennstoffart erfolgt, wobei $P_{system\ requirement}(L_2)$ ein sich beim Lastzustand ($L_2$) der Wärmekraftmaschine im Bereich der Brennkammer einstellender Systeminnendruck ist.

5. Verfahren nach einem der Ansprüche 2 bis 4,
**dadurch gekennzeichnet, dass** die Standard-Ablastung durch Drosselung der Brennstoffzufuhr durchgeführt wird mit einer Drosselrate $r_1$, und
dass die Not-Ablastung mit einer Drosselrate $r_2$ mit $r_2 \geq 6 \cdot r_1$.

6. Verfahren nach Anspruch 3,
**dadurch gekennzeichnet, dass** in Fällen eines wiederholten Abfallens des Gasdruckes $p_{Gas}$ nach Erreichen von $p_{safety\ margin}(L)$ auf einen Druckwert $p_{action\ limit}(L)$ die im Anspruch 2 beschriebene Maßnahme wiederholt wird, und dass im Falle eines wiederholten Durchführens der vorstehenden Maßnahme der Gasdruck $p_{Gas}$ einen Mindestdruckwert $p_{min}$ unterschreitet, entweder die vollständige Not-Ablastung durch geführt wird oder eine Umschaltung der Brennstoffversorgung auf eine andere Brennstoffart erfolgt.

7. Verfahren nach einem der Ansprüche 2 bis 6,
**dadurch gekennzeichnet, dass** die Überführung der Wärmekraftmaschine in den Ausgangslastzustand $L_0$ erfolgt, nachdem der sich bei $p_{Gas} = p_{safety\ margin}(L)$ einstellende Lastzustand stabilisiert hat.

**8.** Verfahren nach einem der Ansprüche 2 bis 7,
**dadurch gekennzeichnet, dass** die Überführung der Wärmekraftmaschine in den Ausgangslastzustand $L_0$ gemäß eines Standard-Lastaufbaus durchgeführt wird sofern gilt:

$$p_{Gas} \geq p_{loading\ hysteresis}$$

und

$$p_{loading\ hysteresis} > p_{action\ limit,}$$

und
dass der Standard-Lastaufbau mit einer von der jeweiligen Wärmekraftmaschine abhängigen Rate von Brennstoffzufuhr, vorzugsweise mit einer zeitlich konstanten Rate, durchgeführt wird.

**9.** Verfahren nach einem der Ansprüche 3, 5 bis 8,
**dadurch gekennzeichnet, dass** die Überführung der Wärmekraftmaschine in den Ausgangslastzustand $L_0$ durch stufenweises Erhöhen des Lastzustandes (L) derart erfolgt, dass im Falle $p_{Gas} \geq p_{loading\ hysteresis}(L_4)$, mit $p_{loading\ hysteresis}(L_4) > p_{action\ limit}(L_4)$ bei einem Lastzustand $L_4$ eine Auflastung der Wärmkraftmaschine durchgeführt wird bis $p_{Gas}$ dem Druckwert $p_{safety\ margin}(L_3)$ bei einem höheren Lastzustand $L_3$ entspricht, steigt im Weiteren $p_{Gas}$ auf dem gleich bleibenden Lastzustand $L_3$ an und erreicht den Druckwert $p_{loading\ hysteresis}(L_3)$, so wird die vorstehende Auflastung sooft wiederholt bis der Ausgangslastzustand $L_0$ erreicht wird.

## Claims

**1.** Method of operating a thermal power plant, preferably a gas turbine power plant, in which a rotary unit, preferably at least one gas turbine stage, is driven by burning gaseous fuel inside a combustion chamber, with hot gases being formed, the rotary energy of which rotary unit is converted into another form of energy, preferably into electrical energy, and describes a load set point (L) of the thermal power plant, the load set point (L) being set by regulating the quantity of gaseous fuel fed to the combustion process,
the thermal power plant being operated at a load set point (L), provided the gaseous fuel is fed to the combustion process through a gas line at a gas pressure gas, with

$$p_{gas} > p_{action\ limit}\ (L),$$

where $p_{action\ limit}$ (L) represents a pressure value which depends at least on the load set point (L) of the thermal power plant, **characterized in that**, for the case where the gas pressure $p_{gas}$ drops to the pressure value $p_{action\ limit}$ (L), at least one of the following measures is initiated:

- throttling of the cooling of the combustion air, which is burned for forming the mixture with the fuel,
- throttling of the steam admixing to the fuel/air mixture to be burned, and
- throttling of the cooling of the steam to be admixed to the fuel/air mixture,

for the case in which the throttling, until one or more of the above measures have been completely shut off, does not lead to any stabilization of or increase in the gas pressure $p_{gas}$, the temperature of the gaseous fuel fed to the combustion process is reduced, and
for the case in which the reduction in the fuel temperature does not lead to the stabilization of or increase in the gas pressure, controlled deloading of the thermal power plant is initiated.

**2.** Method according to Claim 1,
**characterized in that**, if the gas pressure $p_{gas}$ drops below the pressure value $p_{action\ limit}$ ($L_0$) at an initial load set point ($L_0$), the controlled deloading of the thermal power plant is carried out by standard deloading being carried out by reducing the quantity of gaseous fuel fed to the combustion process, and
**in that**, depending on a pressure ratio between $p_{gas}$ and $p_{action\ limit}$ (L) forming during reduction of the load, on the basis of a decision criterion, either

    i) the standard deloading is ended and the thermal power plant is changed to its initial load set point, or
    ii) complete emergency load shedding is carried out, during which the fuel reduction is carried out more rapidly than during the standard deloading, or iii) the fuel supply is changed over to another type of fuel.

3. Method according to Claim 2,
**characterized in that**, for the case $p_{gas} = p_{action\ limit}$ ($L_0$), the standard deloading leads to a gas pressure $p_{gas}$ which assumes a pressure value $p_{safety\ margin}$ ($L_1$) at a reduced load set point $L_1$, for which:

$$p_{safety\ margin}\ (L_1) > p_{action\ limit}\ (L_1),$$

the standard deloading is ended and the thermal power plant is changed to the initial load set point $L_0$ by increasing the fuel feed.

4. Method according to Claim 2,
**characterized in that**, for the case $p_{gas} = p_{action\ limit}$ ($L_0$), the standard deloading leads to a drop in the gas pressure $p_{gas}$ to a pressure value $p_{protection\ limit}$ ($L_2$) at a reduced load set point $L_2$, with $p_{system\ requirement}$ ($L_2$) < $p_{protection\ limit}$ ($L_2$) < $p_{action\ limit}$ ($L_2$) the complete emergency load shedding or the changeover of the fuel feed to another type of fuel is effected, where $p_{system\ requirement}$ ($L_2$) is a system internal pressure set in the region of the combustion chamber at the load set point ($L_2$) of the thermal power plant.

5. Method according to one of Claims 2 to 4, **characterized in that** the standard deloading is carried out by throttling the fuel feed at a throttle rate $r_1$, and **in that** the emergency load shedding is carried out at a throttle rate $r_2$, with $r_2 \geq 6 \cdot r_1$.

6. Method according to Claim 3,
**characterized in that**, in cases where the gas pressure $p_{gas}$ repeatedly drops to a pressure value $p_{action\ limit}$ (L) after $p_{safety\ margin}$ (L) is reached, the measure described in Claim 2 is repeated, and
**in that**, in the case where the above measure is carried out repeatedly, the gas pressure $p_{gas}$ falls below a minimum pressure value $p_{min}$, either the complete emergency load shedding is effected or the fuel supply is changed over to another type of fuel.

7. Method according to one of Claims 2 to 6, **characterized in that** the thermal power plant is changed to the initial load set point $L_0$ once the load set point set at $p_{gas} = p_{safety\ margin}$ (L) has stabilized.

8. Method according to one of Claims 2 to 7, **characterized in that** the thermal power plant is changed to the initial load set point $L_0$ according to a standard load build-up, provided:

$$p_{gas} \geq p_{loading\ hysteresis}$$

and

$$p_{loading\ hysteresis} > p_{action\ limit},$$

and
**in that** the standard load build-up is carried out at a fuel feed rate depending on the respective thermal power plant, preferably at a rate which is constant with respect to time.

9. Method according to one of Claims 3, 5 to 8, **characterized in that** the thermal power plant is changed to the initial load set point $L_0$ by step-by-step increase in the load set point (L) in such a way that, in the case where $p_{gas} \geq p_{loading\ hysteresis}$ ($L_4$), with $p_{loading\ hysteresis}$ ($L_4$) > $p_{action\ limit}$ ($L_4$) , a load build-up of the thermal power plant is carried out at a load set point $L_4$ until $p_{gas}$ corresponds to the pressure value $p_{safety\ margin}$ ($L_3$) at a higher load set point $L_3$, and if $p_{gas}$ furthermore increases at the uniform load set point $L_3$ and reaches the pressure value $p_{loading\ hysteresis}$ ($L_3$), the above load build-up is repeated until the initial load set point $L_0$ is reached.

## Revendications

1. Procédé de fonctionnement d'un moteur thermique, en particulier d'une installation de turbine à gaz, dans lequel on entraîne une unité tournante, de préférence au moins un étage de turbine à gaz, par la combustion de combustible gazeux à l'intérieur d'une chambre de combustion avec formation de gaz chauds, dont l'énergie de rotation est convertie en une autre forme d'énergie, de préférence en énergie électrique, et on décrit un état de charge (L) du moteur thermique, dans lequel on règle l'état de charge (L) par la régulation de la quantité de combustible gazeux fourni à la combustion, dans lequel le moteur thermique fonctionne à un état de charge (L) dans la mesure où le combustible gazeux est fourni par une conduite de gaz sous une pression de gaz $p_{gaz}$ pour laquelle on a

$$p_{gaz} > p_{action\ limit}(L),$$

dans laquelle $p_{action\ limit}$ (L) représente une valeur de pression qui dépend au moins de l'état de charge (L) du moteur thermique, **caractérisé en ce que**

- dans le cas d'une chute de la pression du gaz $p_{gaz}$ à la valeur de pression $p_{action\ limit}$ on prend au moins une des mesures suivantes:

  - étranglement du refroidissement de l'air de combustion, qui est mélangé au combustible pour la combustion;
  - étranglement de l'ajout de vapeur d'eau dans le mélange combustible-air à brûler, et
  - étranglement du refroidissement de la vapeur d'eau à ajouter au mélange combustible-air,

- dans le cas où l'étranglement allant jusqu'à la coupure totale selon une ou plusieurs des mesures précédentes ne conduit pas à une stabilisation ou à une augmentation de la pression de gaz $p_{gaz}$, on réduit la température du combustible gazeux fourni à la combustion, et
- dans le cas où la réduction de la température du combustible ne conduit pas à une stabilisation ou à une augmentation de la pression du gaz, on opère une réduction régulée de la charge du moteur thermique.

2. Procédé selon la revendication 1, **caractérisé en ce que** l'on opère la réduction régulée de la charge du moteur thermique dans le cas où la pression de gaz $p_{gaz}$ tombe sous la valeur de pression $p_{action\ limit}(L_0)$ pour un état de charge initial ($L_0$) , du fait que l'on opère une réduction de charge standard par la réduction de la quantité de combustible gazeux fourni à la combustion, et **en ce que**, en fonction d'un rapport de pression qui s'établit, lors d'une diminution de la charge, entre $p_{gaz}$ et $p_{action\ limit}(L)$, en se basant sur un critère de décision:

   i) soit on met un terme à la réduction standard de la charge et on amène le moteur thermique à son état de charge initial,
   ii) soit on effectue une réduction totale d'urgence de la charge, pour laquelle la réduction de combustible est effectuée plus rapidement que lors de la réduction standard de la charge,
   iii) soit on convertit l'alimentation en combustible en passant à un autre type de combustible.

3. Procédé selon la revendication 2, **caractérisé en ce que**, dans le cas, $p_{gaz} = p_{action\ limit}$ ($L_0$) où la réduction standard de la charge conduit à une pression de gaz $p_{gaz}$, qui prend une valeur de pression $p_{safety\ margin}$ ($L_1$) pour un état de charge réduit ($L_1$) , pour laquelle on a

$$p_{safety\ margin}(L_1) > p_{action\ limit}(L_1),$$

on met un terme à la réduction standard de la charge et on porte le moteur thermique à l'état de charge initial ($L_0$) par une augmentation de l'arrivée de combustible.

4. Procédé selon la revendication 2, **caractérisé en ce que**, dans le cas, $p_{gaz} = p_{action\ limit}$ ($L_0$) où la réduction standard de la charge conduit à une baisse de la pression de gaz $p_{gaz}$ à une valeur de pression $p_{protection\ limit}$ ($L_2$) pour un état de charge réduit ($L_2$), avec

$$p_{system\ requirement}(L_2)\ <\ p_{protection\ limit}(L_2)\ <\ p_{action\ limit}(L_2),$$

on opère la réduction totale d'urgence de la charge ou la conversion de l'alimentation en combustible à un autre type de combustible, dans lequel $p_{system\ requirement}$ ($L_2$) est une pression interne du système qui s'établit dans la région de la chambre de combustion pour l'état de charge ($L_2$) du moteur thermique.

5. Procédé selon l'une quelconque des revendications 2 à 4, **caractérisé en ce que** l'on exécute la réduction standard de la charge par étranglement de l'arrivée de combustible avec une vitesse d'étranglement $r_1$, et la réduction d'urgence de la charge avec une vitesse d'étranglement $r_2$ avec $r_2 \geq 6 \cdot r_1$.

6. Procédé selon la revendication 3, **caractérisé en ce que**, dans les cas d'une chute répétée de la pression de gaz $p_{gaz}$ après avoir atteint $p_{safety\ margin}$ (L) à une valeur de pression $p_{action\ limit}$(L), on répète la mesure décrite dans la revendication 2, et **en ce que**, dans le cas d'une exécution répétée de la mesure précitée, où la pression de gaz $p_{gaz}$ descend en dessous d'une valeur de pression minimum $p_{min}$, soit on opère la réduction totale d'urgence de la charge soit on effectue une conversion de l'alimentation en combustible à un autre type de combustible.

7. Procédé selon l'une quelconque des revendications 2 à 6, **caractérisé en ce que** l'on effectue le passage du moteur thermique dans l'état de charge initial ($L_0$), après que l'état de charge s'établissant pour $p_{gaz} = p_{safety\ margin}$ (L) se soit stabilisé.

8. Procédé selon l'une quelconque des revendications 2 à 7, **caractérisé en ce que** l'on opère le passage du moteur thermique dans l'état de charge initial ($L_0$) selon une montée de charge standard, dans la mesure où l'on a

$$p_{gaz}\ \geq\ p_{loading\ hysteresis}$$

et

$$p_{loading\ hysteresis}\ >\ p_{action\ limit},$$

et
**en ce que** l'on opère la montée de charge standard avec un débit d'arrivée de combustible dépendant du moteur thermique respectif, de préférence avec un débit constant dans le temps.

9. Procédé selon l'une quelconque des revendications 3, 5 à 8, **caractérisé en ce que** l'on effectue le passage du moteur thermique dans l'état de charge initial ($L_0$) par une augmentation graduelle de l'état de charge (L) de telle manière que, dans le cas $p_{gaz} \geq p_{loading}$ hysteresis ($L_4$), avec

$$p_{loading\ hysteresis}(L_4)\ >\ p_{action\ limit}(L_4)$$

pour un état de charge ($L_4$), où l'on opère une augmentation de la charge du moteur thermique jusqu'à ce que $p_{gaz}$ corresponde à la valeur de pression $p_{safety\ margin}$ ($L_3$) pour un état de charge plus élevé ($L_3$), $p_{gaz}$ augmente en outre à l'état de charge restant constant ($L_3$), et atteint la valeur de pression $p_{loading\ hysteresis}$ ($L_3$) on répète ainsi l'augmentation de charge précitée aussi souvent que nécessaire jusqu'à ce que l'état de charge initial ($L_0$) soit atteint.

I.

KV, WB, KW → T↑

$p_{Gas}$↓ ← $p_{Gas}$? → STOP

II.

$T_B$↓ → BV↓

$p_{Gas}$↓ ← $p_{Gas}$? → STOP

III.

GA → save

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4211681